# EUROPEAN PATENT SPECIFICATION

(11) **EP 1 618 796 B1**
(45) Date of publication and mention of the grant of the patent: **21.04.2010**
(21) Application number: 04729666.0
(22) Date of filing: 27.04.2004
(51) Int. Cl.: A23L 1/187

(54) **METHOD OF PREPARING A CHEESE FLAN**
VERFAHREN ZUR HERSTELLUNG EINES KÄSEKUCHENS
PROCEDE DE PREPARATION D'UN FLAN AU FROMAGE

(30) Priority: 30.04.2003 ES 200300998
(43) Date of publication of application: 25.01.2006
(73) Proprietor: Delicatessen La Ermita, S.L., 39591 Casar de Periedo (Cantabria) (ES)
(72) Inventor: SALMON GARCIA DE LOS SALMONES, Cándido, E-39591 Casar de Periedo (Cantabria) (ES)
(74) Representative: Urizar Anasagasti, Jesus Maria
(86) International application number: PCT/ES2004/070025
(87) International publication number: WO 2004/095948

(56) References cited:
- ES-T3- 2 164 178
- FR-A- 2 094 941

## Description

### Object of the Invention

The present invention, as stated by its title, refers to a process for preparing a crème caramel which has the particularity of having added cream cheese, as well as the product obtained by said process.

### Background of the Invention

Crème caramel is a product obtained by mixing milk and whisked eggs, to which sugar, or sweetener when making a low-calorie crème caramel, and some other types of flavourings are added. The mixture is arranged in a container in which caramelised sugar has been placed and it is then baked in a water bath.

Spanish patent document ES 2142940 refers to a method for producing a milk-based non-acidified edible gel and the use of this gel, which has the particularity of having transglutaminase added to the milk of human origin at a ratio comprised between 0.1 and 0.5%.

Spanish patent document ES 2164178 refers to a process for preparing in this case a chocolate crème caramel following the traditional method.

### Description of the Invention

The process described herein comprises a first preparation phase of a milk-based dairy product mixture, to which liquid egg, sugar and flavourings such as cinnamon and/or lemon rind are added together with unripened cream cheese, which is the product that provides it with organoleptic qualities distinguished by their fine and light qualities. The milk or dairy product may be whole, skimmed, cream or powdered milk and must be of animal origin with a fat content comprised between 0 and 50% of the original.

It is possible, when trying to achieve a crème caramel with different flavours, for example coffee or chocolate, to add to this mixture a percentage of 2% of soluble coffee and/or 10% of pure dark chocolate coating, with which a coffee or chocolate flavoured creme caramel is obtained, or with other flavours in similar proportions.

The mixture thus obtained is dosed in individual containers together with liquid caramel, which containers will subsequently be vacuum sealed and subjected to a baking process by pasteurization in the container itself, with subsequent cooling of the product to a preservation temperature comprised between and 8° C.

The product thus obtained has the consistency and general appearance of a crème caramel in which the following products are present in the following ratios:

| | |
|---|---|
| - Milk | 50-60% |
| - Unripened cheese | 12-18% |
| - Liquid egg | 14-20% |
| - Sugar | 12-15% |
| - cinnamon | 0.8-1.3% |
| - Lemon rind | 0.4-1.5% |
| - Liquid caramel | 5-8% |

In the coffee flavoured cheese crème caramel variant soluble coffee is added in a percentage comprised between 2% and 3%. When it is a chocolate flavoured crème caramel a pure dark chocolate coating is added between 10% and 12%. An alternative variant implies adding other flavours with similar percentages.

### Preferred Embodiment of the Invention

In an embodiment for obtaining 1000-1020 cheese crème caramel containers with an approximate content of 100-115 g each, this is achieved from a vat with sufficient capacity as to contain 65 litres of skimmed cow milk flavoured with 125 g of cinnamon and 0.55 kg of lemon rind, to which unripened cream cheese in a proportion of 15 kg, 20 kg of liquid egg, 14 kg of sugar or another sweetener in the same proportion are added, mixed by mechanical means for 30 minutes. Then and in a packaging machine the latter is fed into about 1000 containers with an approximate capacity of 0.12 litres each, on which 6 kg of liquid caramel and the approximately 117 kg of the previously obtained mixture are dosed linearly and in the adequate proportion, until filling each container, and then vacuum-sealing them. Between 1000 and 1020 containers are obtained which are subjected to a pasteurization process in a machine suitable for this purpose, heating them at a temperature comprised between 70° and 105° C for a time period comprised between 25 and 35 minutes; they are subsequently packaged and preserved in a refrigerator at a temperature comprised between 0° and 8° C.

The inclusion of liquid caramel is optional, a cheese crème caramel with or without caramel being able to be obtained by the same process.

It is possible to obtain by the same process crème caramel with other added flavours, for example coffee or chocolate, by adding to this mixture a percentage between 2% and 3% of soluble coffee and/or between 10% and 12% of pure dark chocolate coating, with which a coffee or chocolate or other flavoured crème caramel is obtained, for example vanilla flavour, with similar percentages.

## Claims

1. A process for preparing a cheese crème caramel, **characterised in that** it comprises: a first preparation phase for preparing a mixture from milk, sugar, unripened cheese and liquid egg, flavoured with cinnamon and lemon rind; a second preparation phase for the linear dosing of the mixture obtained and liquid caramel in a container in the chosen format, which is vacuum sealed once filled; and a third product baking phase for baking the product in its own container by pasteurization, which container is subjected to a temperature between 70° and 105° C for a period comprised between 25 and 35 minutes, and final cooling of the product at a preservation temperature comprised between 0° and 8° C.

2. A process for preparing a cheese crème caramel according to the previous claim, **characterised in that** the crème caramel obtained includes the following products in the following percentage margin ratios: 50-60% milk, 12-18% unripened cheese, 14-20% liquid egg, 12-15% sugar, 0.8-1.3% cinnamon, 2-3% lemon rind and 5-8% liquid caramel.

3. A process for preparing a cheese crème caramel according to the previous claim, **characterised in that** the crème caramel obtained includes, as well as the products indicated in the previous claim, soluble coffee in a percentage comprised between 2% and 3%.

4. A process for preparing a cheese crème caramel according to claims 2 and 3, **characterised in that** the crème caramel obtained includes, as well as the products indicated in claims 2 or 3, a pure dark chocolate coating in a percentage comprised between 10% and 12%.

5. A process for preparing a cheese crème caramel according to claims 2, 3 and 4, **characterised in that** the crème caramel obtained includes, as well as the products indicated in claims 2, 3 and 4, other flavours, for example vanilla, in similar percentages to those of claims 3 and 4.

## Patentansprüche

1. Verfahren zur Zubereitung einer Käse-Karamell-Creme, **dadurch gekennzeichnet, dass** es Folgendes umfasst: eine erste Zubereitungsphase zur Zubereitung einer Mischung aus Milch, Zucker, ungereiftem Käse und Flüssigei, gewürzt mit Zimt und Zitronenschale; eine zweite Zubereitungsphase zur linearen Dosierung der erhaltenen Mischung und von flüssigem Karamell in einem Behälter mit dem ausgewählten Format, welcher, nachdem er gefüllt ist, vakuumdicht verschlossen ist; und eine dritte Produktbackphase zum Backen des Produkts in seinem eigenen Behälter durch Pasteurisierung, wobei der Behälter einer Temperatur zwischen 70°C und 105°C während einem Zeitraum zwischen 25 und 35 Minuten ausgesetzt ist, und zum abschließenden Kühlen des Produkts auf einer Konservierungstemperatur zwischen 0°C und 8°C.

2. Verfahren zur Zubereitung einer Käse-Karamell-Creme nach dem vorherigen Anspruch, **dadurch gekennzeichnet, dass** die erhaltene Karamell-Creme die folgenden Produkte mit den folgenden prozentualen Bereichsverhältnisse enthält: 50 - 60% Milch, 12 - 18% ungereifter Käse, 14 - 20% Flüssigei, 12 - 15% Zucker, 0,8- 1,3% Zimt, 2 - 3% Zitronenschale und 5 - 8% flüssiges Karamell.

3. Verfahren zur Zubereitung einer Käse-Karamell-Creme nach dem vorherigen Anspruch, **dadurch gekennzeichnet, dass** die erhaltene Karamell-Creme neben den im vorherigen Anspruch angegebenen Produkten löslichen Kaffee mit einem prozentualen Anteil zwischen 2 und 3% enthält.

4. Verfahren zur Zubereitung einer Käse-Karamell-Creme nach den Ansprüchen 2 und 3, **dadurch gekennzeichnet, dass** die enthaltene Karamell-Creme neben den in den Ansprüchen 2 oder 3 angegebenen Produkten eine Kuvertüre aus reiner, dunkler Schokolade mit einem prozentualen Anteil zwischen 10% und 12% enthält.

5. Verfahren zur Zubereitung einer Käse-Karamell-Creme nach den Ansprüchen 2, 3 und 4, **dadurch gekennzeichnet, dass** die erhaltene Karamell-Creme neben den in den Ansprüchen 2, 3 und 4 angegebenen Produkten andere Geschmacksrichtungen, zum Beispiel Vanille, mit zu denen der Ansprüche 3 und 4 ähnlichen prozentualen Anteilen enthält.

## Revendications

1. Procédé de préparation d'une crème caramel au fromage, **caractérisé en ce qu'**il comprend: une première phase de préparation pour préparer un mélange de lait, sucre, fromage non-affiné et de l'oeuf liquide, aromatisé avec de la cannelle et du zeste de citron ; une deuxième phase de préparation pour le dosage linéaire du mélange obtenu et du caramel liquide dans un récipient dans le format choisi, qui es fermé sous vide une fois rempli ; et une troisième phase de cuisson du produit pour cuire le produit dans son propre récipient par pasteurisation, ledit récipient étant soumis à une température entre 70° et 105°C pendant une période comprise entre 25 et 35 minutes, et le refroidissement final du produit à une température de préservation comprise entre 0° et 8°C.

2. Procédée de préparation d'une crème caramel au fromage selon la revendication précédente, **caractérisé en ce que** la crème caramel obtenue inclut les produits suivants dans les rapports des intervalles de pourcentage suivantes : 50 :60% de lait, 12-18% de fromage non-affiné, 14-20% d'oeuf liquide, 12-15% de sucre, 0,8-1,3% de cannelle, 2-3% de zeste de citron et 5-8% de caramel liquide.

3. Procédé de préparation d'une crème caramel au fromage selon la revendication précédente, **caractérisé en ce que** la crème caramel obtenue inclut, en plus des produits indiqués dans la revendication précédente, du café soluble dans un pourcentage compris entre 2 et 3%.

4. Procédé de préparation d'une crème caramel au fromage selon les revendications 2 et 3, **caractérisé en ce que** la crème caramel obtenue inclut, en plus des produits indiqués dans les revendications 2 ou 3, un revêtement de chocolat noir pur dans un pourcentage compris entre 10% et 12%.

5. Procédé de préparation d'une crème caramel au fromage selon les revendications 2, 3 et 4, **caractérisé en ce que** la crème caramel obtenue inclut, en plus des produits indiqués dans les revendications 2, 3 et 4, d'autres saveurs, par exemple vanille, dans des pourcentages similaires à ceux des revendications 3 et 4.
